# EUROPÄISCHE PATENTSCHRIFT

(11) **EP 2 944 479 B1**
(45) Veröffentlichungstag und Bekanntmachung des Hinweises auf die Patenterteilung: **05.06.2019**
(21) Anmeldenummer: 15154981.3
(22) Anmeldetag: 13.02.2015
(51) Int. Cl.: B60C 11/00

(54) **Fahrzeugluftreifen**
Pneumatic tyres for a vehicle
Pneumatiques de véhicule

(30) Priorität: 14.05.2014 DE 102014209059
(43) Veröffentlichungstag der Anmeldung: 18.11.2015
(73) Patentinhaber: Continental Reifen Deutschland GmbH, 30165 Hannover (DE)
(72) Erfinder: Wagner, Kay, 31311 Uetze (DE); Altun, Kadir, 30173 Hannover (DE); Sole, Mandardeb, 30890 Barsinghausen (DE); Chaturvedi, Bhaskar, 30165 Hannover (DE); Schulze, Thomas, 30171 Hannover 1 (DE); Geidel, Christian, 30163 Hannover (DE)
(74) Vertreter: Finger, Karsten

(56) Entgegenhaltungen:
- EP-A2- 2 452 834
- JP-A- 2008 222 155

## Beschreibung

Die Erfindung betrifft einen Fahrzeugluftreifen radialer Bauart mit einer Radialkarkasse, einem mehrlagigen Gürtelverband und einem Laufstreifen, welcher im profilierten Bereich einen Laufstreifenteil aufweist, welcher aus einer radial äußeren Gummischicht, deren Dicke in Richtung des Reifenzenits konstant zunimmt, und einer radial inneren Gummischicht zusammengesetzt ist, wobei die äußere Gummischicht eine geringere Rückprallelastizität aufweist als die innere Gummischicht, welche schulterseitig über die Breite des Laufstreifens in der Bodenaufstandsfläche hinaus verläuft.

Aus der EP 2 452 834 A2 ist ein Fahrzeugluftreifen der eingangs genannten Art bekannt, dessen Laufstreifen aus zwei Gummischichten besteht, die aus unterschiedlichen Kautschukmischungen hergestellt sind. Die äußere Gummischicht soll einen besseren Nassgriff als die innere Gummischicht und einen geringen Laufstreifenabrieb aufweisen.

Bei einer der möglichen Ausführungsformen nimmt die Dicke der radial äußeren Gummischicht zum Reifenzenit zu, wobei die äußere Gummischicht nur im bodenberührenden Teil das Laufstreifens verläuft und volumenmäßig dominiert. Der bekannte Reifen soll insgesamt bei geringem Rollwiderstand gute Nassgriffeigenschaften aufweisen.

Die JP 2008 222155 A offenbart einen Zweiradreifen, dessen Dicke der radial inneren Laufstreifenschicht (Base) vom Zenit des Laufstreifens zu den seitlichen Enden zunimmt. Die radial äußere Laufstreifenschicht ist hierbei auch an den Laufstreifenenden vorhanden und dominiert im mittleren Laufstreifenbereich volumenmäßig. Ein derartiger Zweiradreifen weist eine verringerte Wärmebildung bei hoher Last oder hoher Geschwindigkeit und eine gute Lebensdauer hinsichtlich des Abriebs auf.

Es ist allgemein bekannt, dass mit einer Verbesserung des Nassgriffs meist Einbußen im Abrieb und im Rollwiderstand einhergehen und Verbesserungen im Rollwiderstand je nach Art der gewählten Maßnahme entweder zu Lasten des Abriebs oder zu Lasten des Nassgriffes gehen. Bei der erwähnten Ausführungsform des aus der EP 2 452 834 A2 bekannten Reifens besteht der Laufstreifen auch in den Schulterbereichen vorrangig aus der nassgriffoptimierten Gummischicht, sodass der Rollwiderstand leidet.

Der Erfindung liegt die Aufgabe zugrunde, bei einem Reifen der eingangs genannten Art den Zielkonflikt zwischen Nassgriff und Rollwiderstand besser zu lösen als im Stand der Technik gemäß der EP 2 452 834 A2.

Gelöst wird die gestellte Aufgabe erfindungsgemäß dadurch, dass auch die radial äußere Gummischicht schulterseitig über die Breite des Laufstreifens in der Bodenaufstandsfläche hinaus verläuft, wobei das Volumen der äußeren Gummischicht in schulterseitigen Abschnitten, deren Breite 15% bis 25% der Breite des Laufstreifens in der Bodenaufstandsfläche beträgt, zwischen 20% und 30% des Volumens des Laufstreifenteils in diesen Abschnitten einnimmt, und wobei das Volumen der radial äußeren Gummischicht in dem zwischen den schulterseitigen Abschnitten verlaufenden mittleren Abschnitt 30% bis 50% des Volumens des Laufstreifenteils in diesem Abschnitt einnimmt.

Es ist bekannt, dass etwa zwei Drittel des Rollwiderstandes des Laufstreifens eines Reifens in den Schulterbereichen des Reifens erzeugt werden und nur etwa ein Drittel in der Reifenmitte. Für die Nassgriffeigenschaften ist hingegen der mittlere Bereich des Laufstreifens maßgebend. Es ist daher vorteilhaft, wenn gemäß der Erfindung in den schulterseitigen Bereichen eine rollwiderstandsoptimierte Gummischicht volumenmäßig überwiegt und im mittleren Bereich volumenmäßig ausgewogene Anteile an rollwiderstandsoptimierter und nassgriffoptimierter Gummischicht vorliegen. Der mittlere Abschnitt leistet daher ebenfalls einen gewissen Beitrag zu einem geringen Rollwiderstand. In den schulterseitigen Abschnitten läuft gemäß der Erfindung die in diesen Abschnitten relativ dünne nassgriffoptimierte äußere Gummischicht über die Bodenaufstandsfläche hinaus und gewährleistet daher vor allem bei neuem Reifen sehr gute Nass griffeigenschaften.

Bei einer bevorzugten Ausführungsform der Erfindung weist die radial äußere Gummischicht in den schulterseitigen Abschnitten eine im Wesentlichen konstante Dicke von 1,2 mm bis 2,2 mm auf, wobei Dicken von 1,4 mm bis 2,0 mm besonders bevorzugt sind, um über eine gewisse Lebensdauer auch in den Schulterbereichen eine nassgriffoptimierte Gummischicht zu Verfügung zu stellen.

Es ist gemäß der Erfindung vorteilhaft, wenn die Rückprallelastizität bei Raumtemperatur und bei 70°C der äußeren Gummischicht um 20% bis 80% geringer ist als jene der inneren Gummischicht. Der Wärmeaufbau der inneren Gummischicht ist daher geringer als jene der der äußeren Gummischicht, wodurch die innere Gummischicht bezüglich Rollwiderstand optimiert werden kann, wobei ausgewogene Nassgriff- und Rollwiderstandseigenschaften sichergestellt werden können.

Die Nassgriffeigenschaften des Reifens werden vor allem dann verbessert, wenn die Rückprallelastizität bei 70°C der äußeren Gummischicht 15% bis 39% beträgt, wobei sich eine Rückprallelastizität bei 70° von zumindest 20% der äußeren Gummischicht besonders vorteilhaft auswirkt.

Um den Rollwiderstand niedrig zu halten, weist die innere Gummischicht eine Rückprallelastizität bei 70°C von 40% bis 90% auf. Insbesondere ist eine Rückprallelastizität bei 70°C von 50% bis 70% zu bevorzugen, um den für einen geringen Rollwiderstand maßgebenden Wärmeaufbau niedrig zu halten.

Eine Rückprallelastizität bei Raumtemperatur der äußeren Gummischicht von 5% bis 30%, insbesondere maximal 15%, hat besonders günstige Nassgriffeigenschaften zur Folge.

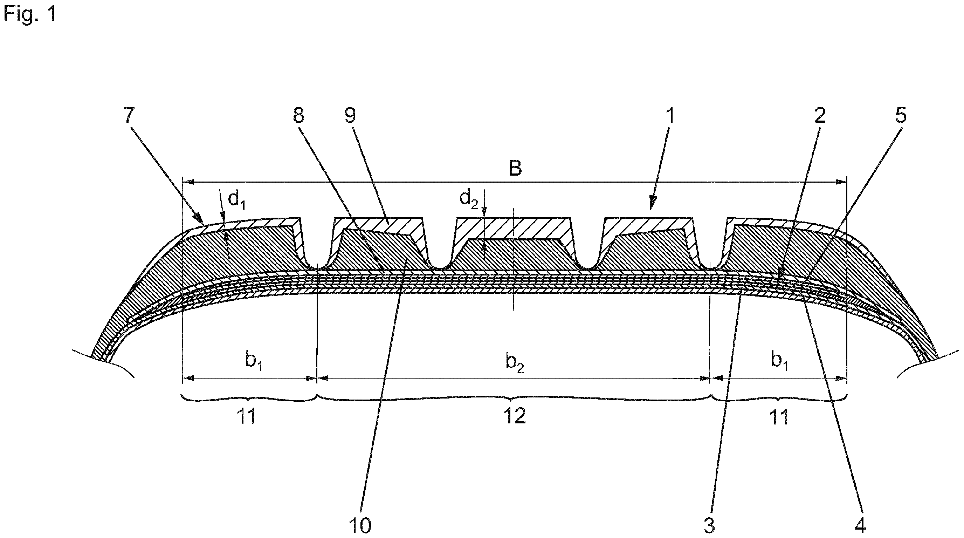

Für einen niedrigen Rollwiderstand ist es besonders vorteilhaft wenn gemäß einer bevorzugten Ausführungsform der Erfindung die Rückprallelastizität bei Raumtemperatur der inneren Gummischicht 15% bis 50%, besonders bevorzugt jedoch bis maximal 35% beträgt.
Weitere Merkmale, Vorteile und Einzelheiten der Erfindung werden nun anhand der Zeichnung, näher erläutert. Dabei zeigt
Fig. 1 einen schematischen Querschnitt durch den Laufstreifenbereich eines Fahrzeugluftreifens mit einer Ausführungsform der Erfindung.

In Fig.1 sind von den üblichen Bauteilen eines Fahrzeugluftreifens ein Laufstreifen 1, ein Gürtelverband 2 bestehend aus mehreren Gürtellagen aus in Gummi eingebetteten, vorzugsweise aus Stahlkord bestehenden Festigkeitsträgern, ferner eine ebenfalls mit Festigkeitsträgern verstärkte Radialkarkasse 3 und eine luftdichte Innenschicht 4 dargestellt. Der Gürtelverband 2 weist bei der dargestellten Ausführungsform eine Gürtelbandage 5 aus gummierten textilen Festigkeitsträgern auf. Von den nicht bezeichneten Seitenwänden sind lediglich die axial äußeren Endabschnitte dargestellt. Die Wulstbereiche mit Wulstkernen, Kernprofilen und den weiteren gegebenenfalls in den Wulstbereichen vorgesehenen Verstärkungslagen sind nicht gezeigt. Der Laufstreifen 1 ist mit einer Profilierung versehen, wobei beispielhaft vier Umfangsnuten dargestellt sind.

Der Laufstreifen 1 weist im profilierten Bereich einen in radialer Richtung zweigeteilten Laufstreifenteil 7 und radial innerhalb des Laufstreifenteils 7 eine Laufstreifenbase 8 auf. Der Laufstreifenteil 7 setzt sich aus einer radial äußeren Gummischicht 9 und einer radial inneren Gummischicht 10 zusammen, wobei beide Gummischichten 9, 10 über die Breite B des Reifens in der Bodenaufstandsfläche (ermittelt gemäß E.T.R.T.O. Standards - Last bei 70 % der Tragfähigkeit bei einem Innendruck von 2,5 bar, Innendruck 85 % von 2,5 bar) hinaus verläuft und schulterseitig ausläuft. Radial innerhalb der inneren Gummischicht 10 erstreckt sich über den gesamten Reifenumfang die Laufstreifenbase 8, welche die innere Gummischicht 10 vom Gürtelverband 2 bzw. von der Gürtelbandage 5 trennt und eine über den Reifenquerschnitt und den Reifenumfang im Wesentlichen konstante Dicke von 0,4 mm bis 2,0 mm aufweist.

Die radial innere Gummischicht 10 des Laufstreifenteils 7 ist in ihrem mittleren Bereich muldenförmig vertieft ausgebildet, sodass die radial äußere Gummischicht 9 eine zum Zenitbereich kontinuierlich zunehmende Dicke und die radial innere Gummischicht 10 eine zum Zenitbereich entsprechend abnehmende Dicke aufweist. Nachfolgend wird der Laufstreifenteil 7 als über die Breite B in zwei schulterseitige Abschnitte 11 und einen mittleren Abschnitt 12 gegliedert betrachtet. Die schulterseitigen Abschnitte 11 weisen eine Breite b₁ von 15% bis 25% und der mittlere Abschnitt 12 daher eine Breite b₂ von 50% bis 70% der Laufstreifenbreite B in auf. Die Dicke d₁ der radial äußeren Gummischicht 9 beträgt in den schulterseitigen Abschnitten 11 1,2 mm bis 2,2 mm, insbesondere 1,4 mm bis 2,0 mm, und ist vorzugsweise weitgehend konstant. In jedem schulterseitigen Abschnitt 11 nimmt ferner die radial äußere Gummischicht 9 zwischen 20% bis 30% des Volumens des Laufstreifenteils 7 in diesem Abschnitt 11ein. Im mittleren Abschnitt 12 beträgt die Dicke d₂ der Gummischicht 9 im Zenitbereich 5,0 mm bis 7,0 mm, insbesondere 6,0 mm, wobei die Gummischicht 9 im Abschnitt 12 30% bis 50% des gesamten Volumens des Laufstreifenteils 7 im Abschnitt 12 einnimmt.

Die radial innere Gummischicht 10 ist hinsichtlich Rollwiderstand optimiert, die radial äußere Gummischicht 9 hinsichtlich Nassgriffverhalten. Als Maß für den Rollwiderstand der Gummischichten 9, 10 im Laufstreifen wird deren Rückprallelastizität gemäß DIN 53512 bei 70°C und als Maß für den Nassgriff deren Rückprallelastizität gemäß DIN 53512 bei Raumtemperatur herangezogen.

Die äußere Gummischicht 9 weist eine Rückprallelastizität bei 70°C von 15% bis 39%, vorzugsweise mindestens 20%, auf. Die Rückprallelastizität bei 70°C der inneren Gummischicht 10 beträgt 40% bis 90%, insbesondere 50% bis 70%. Dabei soll die Rückprallelastizität bei 70°C der äußeren Gummischicht 9 um 20% bis 80% geringer sein als jene der inneren Gummischicht 10. Die innere Gummischicht 10 weist daher einen geringeren Rollwiderstand auf als die äußere Gummischicht 9.

Die Rückprallelastizität bei Raumtemperatur der äußeren Gummischicht 9 beträgt 5% bis 30%, insbesondere 5% bis 15%, und jene der Gummischicht 10 15% bis 50%, insbesondere 15% bis 35%. Die Rückprallelastizität bei Raumtemperatur der Gummischicht 9 soll um 20% bis 80% geringer als jene der Gummischicht 10 sein. Die radial äußere Gummischicht 9 weist somit gegenüber der radial inneren Gummischicht 10 einen besseren Nassgriff auf.

Für einen niedrigen Rollwiderstand eines Fahrzeugluftreifens sind vorrangig die schulterseitigen Laufstreifenbereiche von Bedeutung. Durch den in den schulterseitigen Abschnitten 11 hohen Anteil an rollwiderstandsoptimierter Gummimischung der radial inneren Gummischicht 10 wird der Rollwiderstand niedrig gehalten. Die dünne nassgriffoptimierte äußere Gummischicht 9 in den schulterseitigen Abschnitten 11entfaltet ihrer Wirkung vorrangig bei neuem nicht abgefahrenem Reifen. Der mittlere Abschnitt 12 des Laufstreifenteils 7 eines erfindungsmäßigen Fahrzeugluftreifens ist hinsichtlich der Nassgriffeigenschaften optimiert, da hier der Anteil an der auf guten Nassgriff ausgelegten Gummimischung durch die entsprechend ausgelegte Gummischicht 9 vergleichsweise hoch ist.

Die Rückprallelastizität der einzelnen für die Gummischichten 9 und 10 verwendeten Kautschukmischungen kann, wie es dem Fachmann bekannt ist, durch die Auswahl und den Anteil entsprechender Kautschuktypen bzw. Kautschukverschnitte, durch die Auswahl und den Anteil von Füllstoffen bzw. Füllstofftypen und durch den Grad der Vernetzung eingestellt werden. Die Rückprallelastizität kann insbesondere durch den Füllgrad der Kautschukmischung beeinflusst werden, wobei ein höherer Füllgrad zu einer höheren Rückprallelastizität führt. Eine Kautschukmischung mit einer geringen Rückprallelastizität enthält beispielsweise Ruß in einem Anteil von 40 phr, jene mit einer größeren Rückprallelastizität Ruß in einem Anteil von 50 phr. Zu den weiteren Bestandteilen der Mischungen gehören die üblichen Zusatzstoffe, wie Zinkoxid, Schwefel, Beschleuniger, Verarbeitungshilfsmittel und Alterungsschutzmittel. Ihre Anteile können den für Mischungen in Laufstreifen für Fahrzeugluftreifen üblichen Anteilen entsprechen.

### Bezugsziffernliste

- 1 ............................: Laufstreifen
- 2 ............................: Gürtelverband
- 3 ............................: Radialkarkasse
- 4 ............................: Innenschicht
- 5 ............................: Gürtelbandage
- 7 ...........................: Laufstreifenteil
- 8 ............................: Laufstreifenbase
- 9 ............................: äußere Gummischicht
- 10 ..........................: innere Gummischicht
- 11 ..........................: schulterseitiger Abschnitt
- 12 .........................: mittlerer Abschnitt
- B ...........................: Bodenaufstandsflächenbreite

## Patentansprüche

1. Fahrzeugluftreifen radialer Bauart mit einer Radialkarkasse (3), einem mehrlagigen Gürtelverband (2) und einem Laufstreifen (1), welcher im profilierten Bereich einen Laufstreifenteil (7) aufweist, welcher aus einer radial äußeren Gummischicht (9), deren Dicke in Richtung des Reifenzenits kontinuierlich zunimmt, und einer radial inneren Gummischicht (10) zusammengesetzt ist, wobei die äußere Gummischicht (9) eine geringere Rückprallelastizität aufweist als die innere Gummischicht (10), welche schulterseitig über die Breite (B) des Laufstreifens (1) in der Bodenaufstandsfläche hinaus verläuft,
**dadurch gekennzeichnet,**
**dass** auch die radial äußere Gummischicht (9) schulterseitig über die Breite (B) des Laufstreifens (1) in der Bodenaufstandsfläche hinaus verläuft, wobei das Volumen der äußeren Gummischicht (9) in schulterseitigen Abschnitten (11), deren Breite (b1) 15% bis 25% der Breite (B) des Laufstreifens (1) in der Bodenaufstandsfläche beträgt, zwischen 20% und 30% des Volumens des Laufstreifenteils (7) in diesen Abschnitten (11) einnimmt, und wobei das Volumen der radial äußeren Gummischicht (9) in dem zwischen den schulterseitigen Abschnitten (11) verlaufenden mittleren Abschnitt (12) 30% bis 50% des Volumens des Laufstreifenteils (7) in diesem Abschnitt (12) einnimmt.

2. Fahrzeugluftreifen nach Anspruch 1 **dadurch gekennzeichnet, dass** die radial äußere Gummischicht (9) in den schulterseitigen Abschnitten (11) eine im wesentlichen konstante Dicke d₁ von 1,2 mm bis 2,2 mm aufweist.

3. Fahrzeugluftreifen nach Anspruch 2 **dadurch gekennzeichnet, dass** die Dicke d₁ der radial äußeren Gummischicht (9) in den schulterseitigen Abschnitten (11) 1,4 bis 2,0 mm beträgt.

4. Fahrzeugluftreifen nach einem der Ansprüche 1 bis 3 **dadurch gekennzeichnet, dass** die Rückprallelastizität bei Raumtemperatur und bei 70°C (gemäß DIN 53512) der äußeren Gummischicht (9) um 20% bis 80% geringer ist als jene der inneren Gummischicht (10).

5. Fahrzeugluftreifen nach einem der Ansprüche 1 bis 4 **dadurch gekennzeichnet, dass** die Rückprallelastizität bei 70°C der äußeren Gummischicht (9) 15% bis 39% beträgt.

6. Fahrzeugluftreifen nach Anspruch 5 **dadurch gekennzeichnet, dass** die Rückprallelastizität bei 70°C der äußeren Gummischicht (9) mindestens 20% beträgt.

7. Fahrzeugluftreifen nach einem der Ansprüche 1 bis 6 **dadurch gekennzeichnet, dass** die Rückprallelastizität bei 70°C der inneren Gummischicht (10) 40% bis 90% beträgt.

8. Fahrzeugluftreifen nach Anspruch 7 **dadurch gekennzeichnet, dass** die Rückprallelastizität bei 70°C der inneren Gummischicht (10) 50% bis 70% beträgt.

9. Fahrzeugluftreifen nach einem der Ansprüche 1 bis 8 **dadurch gekennzeichnet, dass** die Rückprallelastizität bei Raumtemperatur der äußeren Gummischicht (9) 5% bis 30% beträgt.

10. Fahrzeugluftreifen nach Anspruch 9 **dadurch gekennzeichnet, dass** die Rückprallelastizität bei Raumtemperatur der äußeren Gummischicht (9) maximal 15% beträgt.

11. Fahrzeugluftreifen nach einem der Ansprüche 1 bis 10 **dadurch gekennzeichnet, dass** die Rückprallelastizität bei Raumtemperatur der inneren Gummischicht (10) 15% bis 50% beträgt.

12. Fahrzeugluftreifen nach Anspruch 11 **dadurch gekennzeichnet, dass** die Rückprallelastizität bei Raumtemperatur der inneren Gummischicht (10) maximal 35% beträgt.

## Claims

1. Pneumatic vehicle tyre of a radial type of construction, with a radial carcass (3), a multi-ply breaker belt assembly (2) and a tread (1), which in the profiled region has a tread part (7) that is made up of a radially outer rubber layer (9), the thickness of which increases continuously in the direction of the crown of the tyre, and a radially inner rubber layer (10), wherein the outer rubber layer (9) has a lower rebound resilience than the inner rubber layer (10), which at the shoulders extends beyond the width (B) of the tread (1) in the ground contact area, **characterized**
**in that** the radially outer rubber layer (9) also at the shoulders extends beyond the width (B) of the tread (1) in the ground contact area, wherein the volume of the outer rubber layer (9) in shoulder portions (11), the width (b1) of which is 15% to 25% of the width (B) of the tread (1) in the ground contact area, accounts for between 20% and 30% of the volume of the tread part (7) in these portions (11), and wherein the volume of the radially outer rubber layer (9) in the middle portion (12), running between the shoulder portions (11), accounts for 30% to 50% of the volume of the tread part (7) in this portion (12) .

2. Pneumatic vehicle tyre according to Claim 1, **characterized in that** the radially outer rubber layer (9) in the shoulder portions (11) has a substantially constant thickness d₁ of 1.2 mm to 2.2 mm.

3. Pneumatic vehicle tyre according to Claim 2, **characterized in that** the thickness d₁ of the radially outer rubber layer (9) in the shoulder portions (11) is 1.4 to 2.0 mm.

4. Pneumatic vehicle tyre according to one of Claims 1 to 3, **characterized in that** the rebound resilience at room temperature and at 70°C (according to DIN 53512) of the outer rubber layer (9) is 20% to 80% less than that of the inner rubber layer (10).

5. Pneumatic vehicle tyre according to one of Claims 1 to 4, **characterized in that** the rebound resilience at 70°C of the outer rubber layer (9) is 15% to 39%.

6. Pneumatic vehicle tyre according to Claim 5, **characterized in that** the rebound resilience at 70°C of the outer rubber layer (9) is at least 20%.

7. Pneumatic vehicle tyre according to one of Claims 1 to 6, **characterized in that** the rebound resilience at 70°C of the inner rubber layer (10) is 40% to 90%.

8. Pneumatic vehicle tyre according to Claim 7, **characterized in that** the rebound resilience at 70°C of the inner rubber layer (10) is 50% to 70%.

9. Pneumatic vehicle tyre according to one of Claims 1 to 8, **characterized in that** the rebound resilience at room temperature of the outer rubber layer (9) is 5% to 30%.

10. Pneumatic vehicle tyre according to Claim 9, **characterized in that** the rebound resilience at room temperature of the outer rubber layer (9) is a maximum of 15%.

11. Pneumatic vehicle tyre according to one of Claims 1 to 10, **characterized in that** the rebound resilience at room temperature of the inner rubber layer (10) is 15% to 50%.

12. Pneumatic vehicle tyre according to Claim 11, **characterized in that** the rebound resilience at room temperature of the inner rubber layer (10) is a maximum of 35%.

## Revendications

1. Pneumatique de véhicule de construction radiale, comprenant une carcasse radiale (3), un ensemble de ceinture (2) à plusieurs couches et une bande de roulement (1), laquelle comprend, dans la région profilée, une partie de bande de roulement (7) qui est composée d'une couche de caoutchouc (9) radialement extérieure, dont l'épaisseur augmente de manière continue en direction du sommet de pneumatique, et d'une couche de caoutchouc (10) radialement intérieure, la couche de caoutchouc (9) extérieure présentant une élasticité de rebondissement plus faible que la couche de caoutchouc (10) intérieure, laquelle s'étend côté épaulement sur la largeur (B) de la bande de roulement (1) dans la surface de contact au sol,
**caractérisé en ce**
**qu'**également la couche de caoutchouc (9) radialement extérieure s'étend côté épaulement sur la largeur (B) de la bande de roulement (1) dans la surface de contact au sol, le volume de la couche de caoutchouc (9) extérieure dans des sections (11) côté épaulement, dont la largeur (b1) représente de 15 % à 25 % de la largeur (B) de la bande de roulement (1) dans la surface de contact au sol, occupant entre 20 % et 30 % du volume de la partie de bande de roulement (7) dans ces sections (11), et le volume de la couche de caoutchouc (9) radialement extérieure dans la section médiane (12) s'étendant entre les sections (11) côté épaulement occupant de 30 % à 50 % du volume de la partie de bande de roulement (7) dans cette section (12).

2. Pneumatique de véhicule selon la revendication 1, **caractérisé en ce que** la couche de caoutchouc (9) radialement extérieure présente, dans les sections (11) côté épaulement, une épaisseur d₁ sensiblement constante de 1,2 mm à 2,2 mm.

3. Pneumatique de véhicule selon la revendication 2, **caractérisé en ce que** l'épaisseur d₁ de la couche de caoutchouc (9) radialement extérieure dans les sections (11) côté épaulement est de 1,4 à 2,0 mm.

4. Pneumatique de véhicule selon l'une des revendications 1 à 3, **caractérisé en ce que** l'élasticité de rebondissement à température ambiante et à 70 °C (selon DIN 53512) de la couche de caoutchouc (9) extérieure est inférieure de 20 % à 80 % à celle de la couche de caoutchouc (10) intérieure.

5. Pneumatique de véhicule selon l'une des revendications 1 à 4, **caractérisé en ce que** l'élasticité de rebondissement à 70 °C de la couche de caoutchouc (9) extérieure est de 15 % à 39 %.

6. Pneumatique de véhicule selon la revendication 5, **caractérisé en ce que** l'élasticité de rebondissement à 70 °C de la couche de caoutchouc (9) extérieure est d'au moins 20 %.

7. Pneumatique de véhicule selon l'une des revendications 1 à 6, **caractérisé en ce que** l'élasticité de rebondissement à 70 °C de la couche de caoutchouc (10) intérieure est de 40 % à 90 %.

8. Pneumatique de véhicule selon la revendication 7, **caractérisé en ce que** l'élasticité de rebondissement à 70 °C de la couche de caoutchouc (10) intérieure est de 50 % à 70 %.

9. Pneumatique de véhicule selon l'une des revendications 1 à 8, **caractérisé en ce que** l'élasticité de rebondissement à température ambiante de la couche de caoutchouc (9) extérieure est de 5 % à 30 %.

10. Pneumatique de véhicule selon la revendication 9, **caractérisé en ce que** l'élasticité de rebondissement à température ambiante de la couche de caoutchouc (9) extérieure est d'au maximum 15 %.

11. Pneumatique de véhicule selon l'une des revendications 1 à 10, **caractérisé en ce que** l'élasticité de rebondissement à température ambiante de la couche de caoutchouc (10) intérieure est de 15 % à 50 %.

12. Pneumatique de véhicule selon la revendication 11, **caractérisé en ce que** l'élasticité de rebondissement à température ambiante de la couche de caoutchouc (10) intérieure est d'au maximum 35 %.
